# FASCICULE DE BREVET EUROPEEN

(11) **EP 1 902 509 B1**
(45) Date de publication et mention de la délivrance du brevet: **17.05.2017**
(21) Numéro de dépôt: 06778830.7
(22) Date de dépôt: 07.07.2006
(51) Int. Cl.: H02K 7/10, H02K 7/102

(54) **MOTEUR OU MOTO-RÉDUCTEUR ÉLECTROMAGNETIQUE ASSOCIÉ A UN SYSTÈME DE VERROUILLAGE ET DÉVERROUILLAGE MÉCANIQUE UNIDIRECTIONNEL OU BIDIRECTIONNEL ET À UN SYSTÈME DE RAPPEL ÉLASTIQUE**
ELEKTROMAGNETISCHER MOTOR ODER GETRIEBEMOTOR IN ASSOZIATION MIT EINEM UNIDIREKTIONALEN ODER BIDIREKTIONALEN MECHANISCHEN VERRIEGELUNGS- UND -ENTRIEGELUNGSSYSTEM UND MIT EINEM ELASTISCHEN RÜCKKEHRSYSTEM
ELECTROMAGNETIC MOTOR OR GEAR MOTOR ASSOCIATED WITH A ONE-WAY OR TWO-WAY MECHANICAL LOCKING AND UNLOCKING SYSTEM AND WITH AN ELASTIC RETURN SYSTEM

(30) Priorité: 11.07.2005 FR 0552144
(43) Date de publication de la demande: 26.03.2008
(73) Titulaire: Moving Magnet Technologies, 25000 Besançon (FR)
(72) Inventeur: TBATOU, Jamal, F-25300 Pontarlier (FR); GANDEL, Pierre, F-25660 Montfaucon (FR)
(74) Mandataire: IP Trust
(86) Numéro de dépôt international: PCT/FR2006/001657
(87) Numéro de publication internationale: WO 2007/006956

(56) Documents cités:
- EP-A- 0 448 515
- WO-A-2004/038269
- US-A1- 2001 047 916

## Description

La présente invention concerne le domaine des moteurs et moto-réducteurs électromagnétiques rotatifs ou linéaires, comprenant au moins une bobine d'alimentation électrique, associés à un système de verrouillage et déverrouillage mécanique unidirectionnel ou bidirectionnel et comprenant un système de rappel élastique de l'organe mobile, appelé rotor, en une position prédéfinie.

Il existe déjà dans l'état de l'art antérieur des systèmes de verrouillage et déverrouillage mécaniques unidirectionnels ou bidirectionnels comme décrits dans les brevets US275388 ou US5460253. Ces systèmes permettent de transmettre un couple dans les deux directions de rotation et de bloquer les efforts grâce à des rouleaux précontraints par des ressorts et mobiles entre un anneau extérieur et un élément intérieur cylindrique. En fonction de la rotation relative des deux parties intérieure et extérieure, il est possible de bloquer la rotation de l'une par rapport à l'autre. De même, à l'aide d'une troisième partie mécanique, il est possible de débloquer le système et permettre la rotation de l'ensemble. Ces systèmes sont couramment utilisés pour les colonnes de direction automobiles.

De plus, il existe déjà des moteurs électromagnétiques utilisant ce type de système de verrouillage et déverrouillage mécanique dans le but de rendre le moteur insensible aux fluctuations de la charge extérieure s'exerçant sur l'organe piloté par le moteur en bloquant la rotation de l'organe lorsqu'une charge s'exerce sur lui. Par exemple, le brevet US06390264 présente une telle association moteur + système de verrouillage pour application aux moteurs actionnant les vitres d'automobiles. Un autre exemple est le brevet US06557688 qui présente lui aussi un actionneur électromagnétique avec un système de verrouillage mécanique apte à permettre le mouvement bidirectionnel de l'actionneur tout en bloquant les charges extérieures appliquées sur l'organe piloté. Cet ensemble se destine typiquement aux mécanismes de fermeture de porte automobile. Les documents US2001/047916, EP0448515 et WO 2004/038269 décrivent aussi des systèmes connus. Ces systèmes, s'ils sont efficaces dans certains cas, ne peuvent pas être utilisés dans des applications de sécurité où un retour en une position prédéfinie est demandé lors d'une coupure de l'alimentation électrique. C'est notamment le cas dans de nombreuses applications automobiles comme les vannes de circulation de fluide. Dans ces applications sensibles, le moteur lutte contre les forces de frottement pour ouvrir un conduit à la demande du conducteur et doit maintenir une position malgré des fluctuations importantes du flux (charge extérieure). Ainsi, pour limiter la consommation électrique pendant le fonctionnement, il est possible d'envisager l'utilisation d'un système de verrouillage précédemment cité. Dans ce cas, le système de verrouillage bloque la charge extérieure exercée par le fluide. L'actionneur n'a alors besoin que d'une consommation électrique limitée égale à celle qu'il aurait besoin si aucune charge extérieure ne s'exerçait sur son axe. Cependant, s'il y a une coupure d'alimentation électrique, le moteur doit permettre le retour en une position de repos de l'organe piloté, position où il n'y a pas de danger pour le fonctionnement de l'automobile. Généralement, cette fonction est réalisée par des organes de rappel élastique, tels des ressorts de torsion ou spiraux, qui, une fois l'alimentation électrique coupée, ramènent le rotor en une position prédéfinie. Mais cette fonction n'est jamais associée à un système de verrouillage et déverrouillage mécanique de façon simple et nécessite souvent des systèmes volumineux avec des moyens de désengagement supplémentaires du verrou.

C'est ainsi un des objets de la présente invention que de proposer l'association innovante d'un moteur ou moto-réducteur électromagnétique avec un système de verrouillage et déverrouillage mécanique et un système de rappel élastique permettant son utilisation, non limitative, dans ce type d'applications critiques pour la sécurité.

Un autre des objets de l'invention est de proposer un ensemble compact et simple où le système de verrouillage et déverrouillage mécanique est intégré au sein du moteur et dont le désengagement du verrou est réalisé par le seul système de rappel élastique.

A cet effet, l'invention concerne selon son acception la plus générale un moteur électromagnétique réalisant une course rotative ou linéaire comprenant au moins une bobine d'alimentation électrique et présentant un rotor entraînant un axe de sortie associé à un système de verrouillage et déverrouillage mécanique du mouvement de l'axe de sortie, ledit système de verrouillage et déverrouillage comprenant une première partie mobile solidaire du rotor et une deuxième partie mobile formant un verrou solidaire de l'axe de sortie, l'ensemble formé par le moteur et le système de verrouillage et déverrouillage comprenant un système de rappel élastique apte à déverrouiller le système de verrouillage et à ramener le rotor et l'axe en une position prédéfinie, caractérisé en ce que le système de rappel élastique exerce, au moins en partie, son effort sur le rotor du moteur, et en ce que le système de verrouillage est actionné dans l'état verrouillé lorsque conjointement le moteur est alimenté, et la sortie subi un effort résistif dépassant une valeur de seuil.

Le moteur présente un ou deux organes de rappel élastique indépendants dont la raideur totale est capable de vaincre les couples de frottement, et dont la fonction est de ramener l'organe piloté en une position de référence prédéfinie. Dans le cas où un seul organe de rappel élastique est utilisé, celui-ci est placé entre le rotor du moteur et une partie fixe de l'actionneur. Cependant, la présente invention devient encore plus intéressante quand le moteur présente deux organes de rappel élastique indépendants. Dans ce mode de réalisation préférentiel, un premier organe de rappel élastique, dont le couple est égal au maximum à la moitié du couple de rappel total, est situé entre le rotor et une partie fixe de l'actionneur. Le second organe de rappel élastique, ayant un couple au moins égal à la moitié du couple de rappel total, est fixé entre l'axe de sortie et une partie fixe de l'actionneur. Le rotor et l'axe de sortie sont rendus solidaires au niveau du système de verrouillage et déverrouillage qui comprend cinq ensembles distincts : un chemin de roulement cylindrique fixe en rotation, un verrou solidaire de l'axe de sortie, un arbre à griffes solidaire du rotor venant au contact du verrou lorsque le rotor entre en mouvement et un ensemble de rouleaux entre lesquels sont positionnés des ressorts de compression. Lorsque l'axe de sortie subit un effort donné, l'arc-boutement des rouleaux est réalisé entre le chemin de roulement et le verrou. Le bon positionnement des rouleaux est assuré et maintenu grâce aux ressorts de compression. Le couple de maintien à fournir par l'actionneur est réduit au moins de moitié du fait que le mécanisme de verrouillage annihile l'action de l'organe de rappel élastique positionné sur l'axe de sortie. Le gain est encore plus appréciable quand les fluctuations de charge sont importantes, ce qui est souvent le cas dans les applications de vanne automobile où ces fluctuations sont souvent supérieures au Newton.mètre.

Dans un mode de réalisation préférentiel, ces différents ensembles sont réalisés de telle sorte que le désengagement du verrou, c'est-à-dire la sortie de l'arc-boutement est possible par un effort exercé sur le rotor au maximum égal au couple de frottement appliqué sur l'axe de sortie en la présence d'un seul organe de rappel élastique au rotor et au maximum égal à la moitié du couple total de frottement appliqué sur l'axe de sortie en la présence de deux organes de rappel élastique indépendants, liés respectivement au rotor et à l'axe de sortie. Ceci est possible en ajustant la géométrie des différents ensembles et en choisissant judicieusement leur matériau, ce qui est connu de l'art antérieur. Sous ces conditions, l'organe de rappel élastique lié au rotor peut déverrouiller, seul, le système.

Lorsque l'actionneur n'est plus alimenté, il y a alors désengagement du verrou et le(s) ressort(s) agisse(nt) conjointement et a (ont) un couple total qui permet le retour conjoint du rotor et de l'axe de sortie, contre les efforts de frottement, dans une position prédéfinie.

Il est possible de réaliser un tel ensemble en tenant compte d'un ensemble de réduction associé au moteur. Dans ce cas, l'organe de rappel élastique permettant de désengager le verrou est placé sur l'arbre moteur en sortie de l'ensemble de réduction et non directement sur le rotor.

Un autre des objets de la présente invention est ainsi de proposer un moto-réducteur associé à un système de verrouillage et déverrouillage mécanique et à un système de rappel élastique dont le désengagement du verrou est réalisé par le seul système de rappel élastique agissant sur l'arbre de sortie de l'ensemble de réduction.

Un autre des objets de la présente invention est de proposer un système de verrouillage et déverrouillage qui présente un verrouillage sans jeu mécanique.

Enfin, un autre des objets de l'invention est aussi de proposer un ensemble présentant un système de verrouillage et déverrouillage, tel que défini précédemment, unidirectionnel ou bidirectionnel.

La compréhension de la description sera facilitée en se référant aux dessins ci-joints dans lesquels :
- La figure 1 montre une vue éclatée du système de verrouillage et déverrouillage utilisé dans la présente invention.
- La figure 2 montre une vue suivant l'axe de rotation du système de verrouillage et déverrouillage utilisé dans la présente invention.
- Les figures 3A, 3B et 3C montrent une vue isolée du système de verrouillage et déverrouillage utilisé dans la présente invention dans les différentes étapes de déverrouillage du système.
- La figure 4 montre l'intégration du système de verrouillage et déverrouillage sur un rotor d'un moteur utilisé dans la présente invention.
- La figure 5 montre le système de verrouillage et déverrouillage intégré dans un moteur et comprenant les moyens de rappel élastique de la présente invention.
- La figure 6 montre une vue éclatée de la figure 5.
- La figure 7 montre la présente invention appliquée à un moto-réducteur, c'est-à-dire un moteur comprenant un ensemble de réduction mécanique.

La présente invention est décrite sur la base d'un ensemble rotatif comprenant deux organes de rappel élastique indépendants mais est également réalisable dans une variante linéaire et/ou avec un seul organe élastique au rotor.

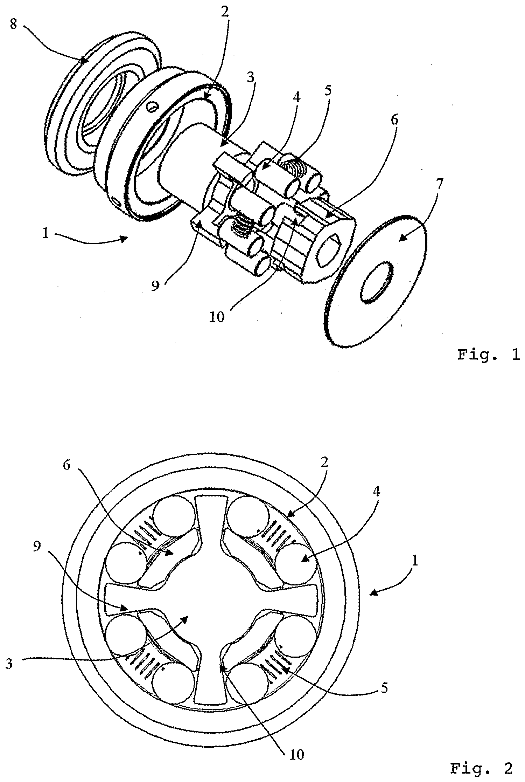

La figure 1 montre le détail du système de verrouillage et déverrouillage (1) utilisé dans la présente invention. Dans un mode de réalisation préférentiel, il se compose d'un chemin de roulement (2) cylindrique extérieur, une première partie mobile sous forme d'un rotor à griffes (3), huit rouleaux (4), quatre ressorts de compression (5), une deuxième partie mobile sous forme d'un verrou (6), le tout étant compris entre un flasque (7) et une butée à billes (8) qui destine le système de verrouillage et déverrouillage (1) à être intégré dans un moteur (15) entre son rotor (11) et l'axe de sortie (21) qu'il commande. Le chemin de roulement (2) est toujours fixe, et les rouleaux (4) roulent à l'intérieur. Les ressorts de compression (5) permettent le maintien et la cohésion du système (1). Le rotor à griffes (3) est destiné à être solidaire du rotor (11) du moteur (15) et présente préférentiellement 4 griffes (9) entre lesquelles se trouvent deux rouleaux (4) et un ressort de compression (5). Le verrou (6) présente quatre fentes (10) de forme sensiblement complémentaire aux griffes (9) et vient ou non en contact avec celles-ci en fonction de l'état du système (1), verrouillé ou déverrouillé. Cette réalisation n'est pas limitative et il est possible de réaliser des variantes en modifiant le nombre et la forme des griffes du rotor à griffes (3), des ressorts (5) ou des rouleaux (4) dans le but de réaliser plus ou moins de motifs élémentaires.

La figure 2 montre ce même système (1) assemblé et depuis l'axe de rotation du verrou (6). On y retrouve les rouleaux (4) et les ressorts de compression (5) qui maintiennent les rouleaux (4). Ces rouleaux (4) roulent entre le chemin de roulement (2) et le verrou (6) et s'arc-boutent en fonction de l'effort de rotation appliqué au verrou (6). Dans les fentes (10) du verrou (6), on retrouve les griffes (9) du rotor à griffes (3) qui viennent, lors du mouvement du rotor à griffes (3), au contact du verrou (6) et permet de transmettre un couple à ce verrou (6) et/ou de déverrouiller l'arc-boutement des rouleaux (4). Ce système (1) peut ainsi être utilisé de façon unidirectionnelle ou bidirectionnelle.

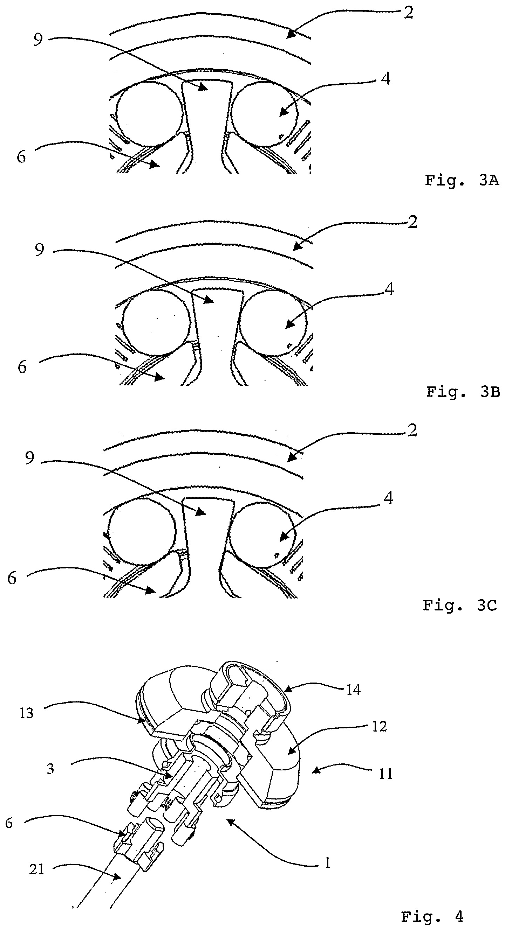

Les figures 3A à 3C explicitent les différentes étapes de déverrouillage sur un seul motif du système (1).

La figure 3A montre le système (1) verrouillé, le rouleau (4) de droite est arc-bouté coincé entre le verrou (6) et le chemin de roulement (2) et la griffe (9) n'est pas en contact avec le verrou (6). Ce système (1) permet ainsi de réaliser un verrouillage sans jeu mécanique, le verrouillage par arc-boutement étant effectif dès l'application du couple suffisant.

En figure 3B, la griffe (9) entre en contact avec le rouleau (4) et l'effort appliqué par le rotor (11) du moteur (15) via la griffe (9) est suffisant à débloquer l'arc-boutement du rouleau (4).

En figure 3C, le rouleau (4) est alors décoincé et sort de sa position, ce qui permet à la griffe (9) d'entrer en contact avec le verrou (6) et de transmettre la rotation à l'axe de sortie (21).

La figure 4 montre une vue éclatée du système de verrouillage et déverrouillage (1) intégré au rotor (11) d'un moteur électromagnétique (15) comprenant une culasse ferromagnétique (12) sous laquelle est placée un aimant multipolaire (13) source de champ magnétique utilisé pour créer un couple. Sur la culasse (12) est placé un aimant bipolaire (14) utilisé comme capteur de position de la culasse (12). Dans cette configuration non limitative le système (1) est placé sous la culasse (12) dans un souci de compacité de l'ensemble. La culasse (12) du moteur (15), sur laquelle le couple produit par le moteur (15) s'applique, est ainsi liée solidairement au rotor à griffes (3) du système (1) qui transmet le couple. Le chemin de roulement (2) est lui destiné à se placer fixe sur l'ensemble statorique (non visible) du moteur (15), alors que le verrou (6) est lié solidaire de l'axe de sortie (21).

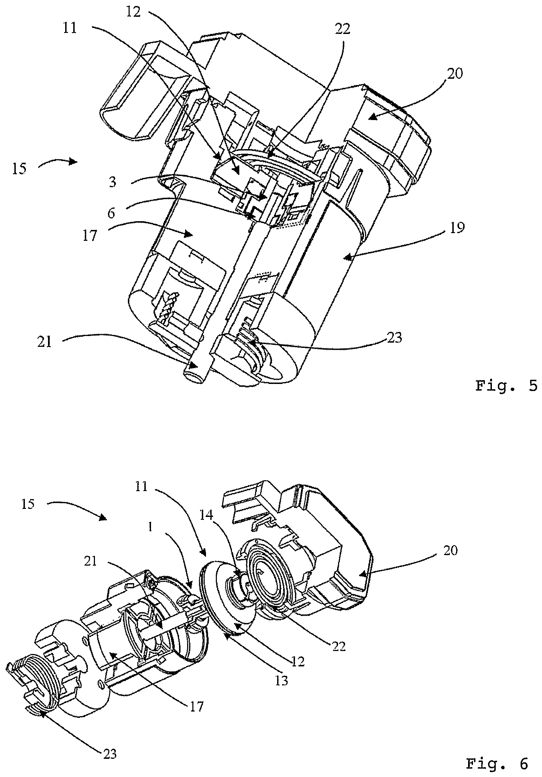

Les figures 5 et 6 présentent le moteur (15) électromagnétique associé au système de verrouillage et déverrouillage (1) comprenant le système de rappel élastique décrit précédemment, dans une vue respectivement coupée et éclatée. Le moteur électromagnétique (15) ou le servo-actionneur présente un rotor (11) comprenant un aimant multipolaire (13) solidaire d'une culasse (12) et, de manière préférentielle, un aimant bipolaire servant à un capteur de la position du rotor (11). Le moteur (15) comprend aussi un ensemble statorique (17) comprenant les moyens électriques d'excitation, tels des bobines (non visible). Tel que présenté, le moteur (15) est surmoulé par une matière thermoplastique (19) et présente un couvercle (20) qui contient toutes les connexions électriques nécessaires au moteur (15). Le moteur (15) comprend enfin un axe de sortie (21) qui est piloté via le système de verrouillage et déverrouillage (1) par le rotor (11) du moteur (15). Le rotor à griffes (3) est ainsi solidaire de la culasse (12) du moteur (15) et le verrou (6) est solidaire de l'axe de sortie (21). Au-dessus de la culasse (12) est placé un premier organe de rappel élastique (22), ici sous la forme d'un ressort spiral qui exerce son couple directement sur la culasse (12). Un deuxième organe de rappel élastique (23), ici sous la forme d'un ressort de torsion, est placé au niveau de la sortie de l'axe (21) du moteur (15) et exerce son couple directement sur l'axe (21). Le couple total produit par les deux organes de rappel élastique, (22) et (23), doit être suffisant à ramener l'axe de sortie (21) contre les frottements exercés sur l'axe de sortie (21). Ainsi, lorsque le moteur (15) actionne l'axe de sortie (21) et atteint une position définie, le couple de rappel du deuxième organe de rappel élastique (23) ainsi que la charge extérieure qui s'applique ponctuellement sont neutralisés par le système de verrouillage et déverrouillage (1) par l'arc-boutement des rouleaux (4), ce système (1) étant dimensionné pour permettre le verrouillage uniquement sous le couple de charge extérieur appliqué. Le maintien de la position est réalisé en alimentant le moteur (15) pour qu'il compense uniquement le couple fourni par le premier organe de rappel élastique (22). Lorsque l'alimentation électrique est coupée, volontairement ou involontairement, le couple de rappel du premier organe de rappel élastique (22) suffit à désengager le verrou et à débloquer le système (1). Les couples des premier et deuxième organes de rappel élastique, (22) et (23), s'ajoutent alors pour ramener l'axe de sortie (21), et donc l'organe piloté, en une position de sécurité prédéfinie.

De manière préférentielle, lorsque le moteur comprend deux systèmes de rappel élastique indépendants, le couple fourni par le premier organe de rappel élastique (22) est au maximum égal au couple exercé par le deuxième organe de rappel élastique (23) lié à l'axe de sortie (21). Ceci est possible par la bonne corrélation entre les formes géométriques du verrou (6) et des rouleaux (4) et les matériaux utilisés.

Ainsi, suivant la présente invention, il est possible de réaliser un moteur électromagnétique (15) sous-dimensionné avec un système de verrouillage et déverrouillage (1) et un système de rappel élastique permettant de ramener l'organe piloté dans une position prédéfinie de sécurité, ceci de manière simple et compact et sans nécessiter un élément de désengagement supplémentaire du système de verrouillage (1).

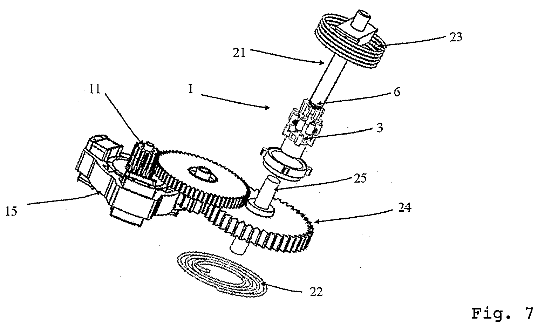

La figure 7 montre une vue éclatée de la présente invention avec un moteur (15) comprenant un ensemble de réduction (24) mécanique associé au système de verrouillage et déverrouillage (1) et au système de rappel élastique. De la même façon que décrit en figure 5 et 6, on retrouve un axe de sortie (21) auquel est lié un deuxième organe de rappel élastique (23) et un arbre (25) sortant de l'ensemble de réduction (24) lié à un premier organe de rappel élastique (22). Le principe de fonctionnement de l'ensemble est ainsi similaire à celui décrit en figure 5 et 6, sauf que le premier organe de rappel élastique (22) applique son couple sur l'arbre (25) en sortie de l'ensemble de réduction (24) et non sur le rotor (11) directement.

## Revendications

1. - Moteur électromagnétique (15) réalisant une course rotative ou linéaire comprenant au moins une bobine d'alimentation électrique et présentant un rotor (11) entraînant un axe de sortie (21) associé à un système de verrouillage et déverrouillage (1) mécanique du mouvement de l'axe de sortie (21), ledit système de verrouillage et déverrouillage (1) comprenant une première partie mobile (3) solidaire du rotor et une deuxième partie mobile formant un verrou (6) solidaire de l'axe de sortie (21), l'ensemble formé par le moteur (15) et le système de verrouillage et déverrouillage (1) comprenant un système de rappel élastique apte à déverrouiller le système de verrouillage (1) et à ramener le rotor (11) et l'axe (21) en une position prédéfinie, **caractérisé en ce que** le système de rappel élastique exerce, au moins en partie, son effort sur le rotor (11) du moteur (15).

2. - Moteur électromagnétique (15) associé à un système de verrouillage et déverrouillage (1) selon la revendication 1, **caractérisé en ce que** le système de rappel élastique est constitué de deux organes de rappel élastique indépendants (22 et 23) liés respectivement au rotor (11) et à l'axe de sortie (21) et agissant conjointement pour ramener le rotor (11) et l'axe (21) dans la position prédéfinie.

3. - Moteur électromagnétique (15) associé à un système de verrouillage et déverrouillage (1) selon l'une des revendications précédentes, **caractérisé en ce que** ledit système de verrouillage et déverrouillage (1) est intégré à l'intérieur du moteur (15) entre la culasse (12) et l'ensemble statorique (17) du moteur (15).

4. - Moteur électromagnétique (15) associé à un système de verrouillage et déverrouillage (1) selon la revendication 2, **caractérisé en ce que** le couple de rappel de l'organe élastique (22) lié au rotor (11) est au maximum égal au couple de rappel de l'organe élastique (23) lié au verrou (6).

5. - Moteur électromagnétique (15) associé à un système de verrouillage et déverrouillage (1) selon l'une des revendications précédentes, **caractérisé en ce que** les organes de rappel élastique (22 et 23) sont des ressorts spiraux, des ressorts de torsion ou des ressorts de compression.

6. - Moteur électromagnétique (15) associé à un système de verrouillage et déverrouillage (1) selon l'une des revendications précédentes, **caractérisé en ce que** la première partie (3) du système (1) solidaire du rotor (11) présente des griffes (9) transmettant le couple au verrou (6) solidaire de l'axe de sortie (21).

7. - Moteur électromagnétique (15) associé à un système de verrouillage et déverrouillage (1) selon l'une des revendications précédentes, **caractérisé en ce que** le verrouillage du système est réalisé sans jeu mécanique.

8. - Moteur électromagnétique (15) réalisant une course rotative ou linéaire avec un ensemble de réduction (24) comprenant au moins une bobine d'alimentation électrique et présentant un arbre (25) entraînant un axe de sortie (21), associé à un système de verrouillage et déverrouillage (1) mécanique unidirectionnel ou bidirectionnel du mouvement de l'axe de sortie (21), ledit système de verrouillage et déverrouillage (1) comprenant une première partie mobile (3) solidaire de l'arbre (25) et une deuxième partie mobile formant un verrou (6) solidaire de l'axe de sortie (21), l'ensemble formé par le moteur (15) avec l'ensemble de réduction (24) + système de verrouillage et déverrouillage (1) comprenant un système de rappel élastique apte à déverrouiller le système de verrouillage (1) et à ramener l'arbre (25) et l'axe (21) en une position prédéfinie,
**caractérisé en ce que** le système de rappel élastique exerce, au moins en partie, son effort sur l'arbre (25) du moteur (15) en sortie du système de réduction (24) et **en ce que** le système de verrouillage est actionné dans l'état verrouillé lorsque conjointement le moteur est alimenté, et la sortie subit un effort résistif dépassant une valeur de seuil.

9. - Moteur électromagnétique (15) associé à un système de verrouillage et déverrouillage (1) selon la revendication précédente, **caractérisé en ce que** le système de rappel élastique est constitué de deux organes de rappel élastique indépendants (22 et 23) liés respectivement à l'arbre (25) et à l'axe de sortie (21) et agissant conjointement pour ramener l'arbre (25) et l'axe (21) dans la position prédéfinie.

10. - Moteur électromagnétique (15) associé à un système de verrouillage et déverrouillage (1) selon la revendication précédente, **caractérisé en ce que** les deux systèmes de rappel élastique (22 et 23) ont des caractéristiques mécaniques différentes.

## Patentansprüche

1. Elektromagnetischer Motor (15), der einen rotierenden oder linearen Hub ausführt, mindestens eine elektrische Versorgungsspule umfasst und einen Rotor (11) aufweist, der eine Ausgangsachse (21) antreibt, die mit einem mechanischen System zur Ver- und Entriegelung (1) der Bewegung der Ausgangsachse (21) verbunden ist, wobei besagtes Ver- und Entriegelungssystem (1) einen ersten, mit dem Rotor verbundenen beweglichen Teil (3) umfasst, und einen zweiten, mit der Ausgangsachse (21) verbundenen beweglichen Teil, der einen Riegel (6) bildet, wobei die durch den Motor (15) und das Ver- und Entriegelungssystem (1) gebildete Einheit ein elastisches Rückstellsystem aufweist, das in der Lage ist, das Verriegelungssystem (1) zu entriegeln und den Rotor (11) und die Achse (21) in eine vordefinierte Position zu bringen, **dadurch gekennzeichnet, dass** das elastische Rückstellsystem mindestens teilweise Kraft auf den Rotor (11) des Motors (15) ausübt.

2. Elektromagnetischer Motor (15), der mit einem Ver- und Entriegelungssystem (1) gemäß Anspruch 1 verbunden ist, **dadurch gekennzeichnet, dass** das elastische Rückstellsystem aus zwei elastischen, voneinander unabhängigen Rückstellelementen (22) und (23) besteht, die jeweils mit dem Rotor (11) und der Ausgangsachse (21) verbunden sind und gemeinsam zusammen wirken, um den Rotor (11) und die Welle (21) in die vordefinierte Position zu bringen.

3. Elektromagnetischer Motor (15), der mit einem Ver- und Entriegelungssystem (1) nach einem der vorhergehenden Ansprüche verbunden ist, **dadurch gekennzeichnet, dass** besagtes Ver- und Entriegelungssystem (1) in den Motor (14) zwischen Zylinderkopf (12) und die Statorbaugruppe (17) des Motors (15) eingebaut wird.

4. Elektromagnetischer Motor (15), der mit einem Ver- und Entriegelungssystem (1) nach Anspruch 2 verbunden ist, **dadurch gekennzeichnet, dass** das Rückstellmoment des mit dem Rotor (11) verbundenen elastischen Rückstellelements (22) höchstens gleich dem Rückstellmoment des mit dem Riegel (6) verbundenen elastischen Elements (23) ist.

5. Elektromagnetischer Motor (15), der mit einem Ver- und Entriegelungssystem (1) nach einem der vorhergehenden Ansprüche verbunden ist, **dadurch gekennzeichnet, dass** die elastischen Rückstellelemente (22 und 23) Spiralfedern, Torsionsfedern oder Druckfedern sind.

6. Elektromagnetischer Motor (15), der mit einem Ver- und Entriegelungssystem (1) nach einem der vorhergehenden Ansprüche verbunden ist, **dadurch gekennzeichnet, dass** der erste Teil (3) des mit dem Rotor (11) verbundenen Systems (1) Klauen (9) aufweist, die das Moment an das mit der Ausgangsachse (21) verbundenen Riegel (6) übertragen.

7. Elektromagnetischer Motor (15), der mit einem Ver- und Entriegelungssystem (1) nach einem der vorhergehenden Ansprüche verbunden ist, **dadurch gekennzeichnet dass** die Verriegelung des Systems ohne mechanisches Spiel erfolgt.

8. Elektromagnetischer Motor (15), der einen rotierenden oder linearen Hub mit einer Untersetzungsbaugruppe (24) durchführt, mindestens eine Stromversorgungsspule umfasst und eine Welle (25) aufweist, die eine Ausgangsachse (21) antreibt, die mit einem mechanischen unidirektionalen oder bidirektionalen System zur Ver- und Entriegelung der Bewegung der Ausgangsachse (21) verbunden ist, wobei das Ver- und Entriegelungssystem (1) einen ersten, mit der Welle (25) verbundenen beweglichen Teil (3) umfasst, und einen zweiten, mit der Ausgangsachse (21) verbundenen beweglichen Teil, der einen Riegel (6) bildet, wobei die durch den Motor (15), die Untersetzungsbaugruppe (24) und das Ver- und Entriegelungssystem (1) gebildete Baugruppe ein elastisches Rückstellsystem umfasst, das in der Lage ist, das Verriegelungssystem (1) zu entriegeln und Welle (25) und Achse (21) in eine vordefinierte Position zu bringen,
**dadurch gekennzeichnet, dass** das elastische Rückstellsystem am Ausgang des Untersetzungssystems (24) mindestens teilweise Kraft auf die Welle (25) des Motors (15) ausübt, und dadurch, dass das Verriegelungssystem im verriegelten Zustand betätigt wird, wenn der Motor mit Strom versorgt wird und gleichzeitig am Ausgang eine Widerstandskraft einwirkt, die einen bestimmten Schwellenwert überschreitet.

9. Elektromagnetischer Motor (15), der mit einem Ver- und Entriegelungssystem (1) gemäß dem vorhergehenden Anspruch verbunden ist, **dadurch gekennzeichnet, dass** das elastische Rückstellsystem aus zwei separaten Rückstellelementen (22 und 23) besteht, die jeweils mit der Welle (25) und der Ausgangsachse (21) verbunden sind und zusammen wirken, um die Welle (25) und die Achse (21) in die vordefinierte Position zu bringen.

10. Elektromagnetsicher Motor, der mit einem Ver- und Entriegelungssystem (1) gemäß dem vorhergehenden Anspruch verbunden ist, **dadurch gekennzeichnet, dass** die beiden elastischen Rückstellsysteme (22 und 23) unterschiedliche mechanische Eigenschaften haben.

## Claims

1. - An electromagnetic motor (15) performing a rotary or linear stroke comprising at least one electrical power supply coil and having a rotor (11) driving an output shaft (21) associated with a system for mechanically locking and unlocking (1) the movement of the output shaft (21), with said locking and unlocking system (1) comprising a first mobile part (3) integral with the rotor and a second mobile part forming a lock (6) integral with the output shaft (21), with the assembly formed by the motor (15) and the locking and unlocking system (1) comprising an elastic return system capable of unlocking the locking system (1) and of returning the rotor (11) and the output shaft (21) to a predefined position, **characterized in that** the elastic return system exerts, at least partly, its load onto the rotor (11) of the motor (15).

2. - An electromagnetic motor (15) associated with a locking and unlocking system (1) according to claim 1, **characterized in that** the elastic return system consists of two independent elastic return members (22 and 23) respectively connected to the rotor (11) and to the output shaft (21) and acting together to return the rotor (11) and the output shaft (21) to the predefined position.

3. - An electromagnetic motor (15) associated with a locking and unlocking system (1) according to one of the preceding claims, **characterized in that** said locking and unlocking system (1) is integrated within the motor (15) between the motor (15) cylinder head (12) and stator assembly (17).

4. - An electromagnetic motor (15) associated with a locking and unlocking system (1) according to claim 2, **characterized in that** the restoring torque of the elastic return member (22) connected to the rotor (11) is at most equal to the restoring torque of the elastic return member (23) connected to the lock (6).

5. - An electromagnetic motor (15) associated with a locking and unlocking system (1) according to one of the preceding claims, **characterized in that** the elastic return members (22 and 23) are spiral springs, torsion springs or compression springs.

6. - An electromagnetic motor (15) associated with a locking and unlocking system (1) according to one of the preceding claims, **characterized in that** the first part (3) of the system (1) integral with the rotor (11) has clamps (9) transmitting the torque to the lock (6) integral with the output shaft (21).

7. - An electromagnetic motor (15) associated with a locking and unlocking system (1) according to one of the preceding claims, **characterized in that** the system is locked with no mechanical clearance.

8. - An electromagnetic motor (15) performing a rotary or linear stroke with a gear reduction assembly (24) comprising at least one electrical power supply coil and having a shaft (25) driving an output shaft (21), associated with a unidirectional or bidirectional system (1) for mechanically locking and unlocking (1) the movement of the output shaft (21), with said locking and unlocking system (1) comprising a first mobile part (3) integral with the shaft (25) and a second mobile part forming a lock (6) integral with the output shaft (21), with the assembly formed by the motor (15) with the gear reduction assembly (24) + the locking and unlocking system (1) comprising an elastic return system capable of unlocking the locking system (1) and of returning the shaft (25) and the output shaft (21) to a predefined position,
**characterized in that** the elastic return system exerts, at least partly, its load onto the shaft (25) of the motor (15) at the output of the gear reduction system (24), and **in that** the locking system is actuated in the locked state when the motor is concurrently powered and the output shaft is subjected to a resistive load exceeding a threshold value.

9. - An electromagnetic motor (15) associated with a locking and unlocking system (1) according to the preceding claim, **characterized in that** the elastic return system consists of two independent elastic return members (22 and 23) respectively associated with the shaft (25) and the output shaft (21) and acting together to return the shaft (25) and the output shaft (21) to the predefined position.

10. - An electromagnetic motor (15) associated with a locking and unlocking system (1) according to the preceding claim, **characterized in that** the two elastic return systems (22 and 23) have different mechanical characteristics.
